# EUROPÄISCHE PATENTSCHRIFT

(11) **EP 3 530 362 B1**
(45) Veröffentlichungstag und Bekanntmachung des Hinweises auf die Patenterteilung: **23.08.2023**
(21) Anmeldenummer: 19155965.7
(22) Anmeldetag: 07.02.2019
(51) Int. Cl.: B08B 15/02

(54) **VORRICHTUNG UND VERFAHREN ZUR AUFBEREITUNG UND VERARBEITUNG VON FASERSTOFFABFÄLLEN**
DEVICE AND METHOD OF PROCESSING FIBRE WASTE
DISPOSITIF ET PROCÉDÉ DE PRÉPARATION ET DE TRAITEMENT DES RÉSIDUS DE MATIÈRES FIBREUSES

(30) Priorität: 14.02.2018 DE 102018103342
(43) Veröffentlichungstag der Anmeldung: 28.08.2019
(73) Patentinhaber: Erutec GmbH, 93133 Burglengenfeld (DE)
(72) Erfinder: EBENSBERGER, Stephan, 93133 Burglengenfeld (DE)
(74) Vertreter: Hofstetter, Schurack & Partner

(56) Entgegenhaltungen:
- EP-A2- 2 206 566
- EP-A2- 2 340 328
- EP-A2- 2 465 673
- WO-A1-88/09228
- DE-A1- 3 902 717
- DE-U1- 9 014 948
- FR-A1- 2 993 463
- JP-A- 2007 283 242

## Beschreibung

Die vorliegende Erfindung betrifft eine Vorrichtung und ein Verfahren zur Aufbereitung und Verarbeitung von Faserstoffabfällen, wie zum Beispiel Mineralwolleabfällen, insbesondere von Glas- oder Steinwolleabfällen, Asbestfasern oder Kohlefasern umfassend mindestens eine Zerkleinerungsvorrichtung zur mechanischen Zerkleinerung der Fasern und/oder Fasergruppen der Faserstoffabfälle. Die Erfindung betrifft zudem ein Verfahren zur Aufbereitung und Verarbeitung von Faserstoffabfällen.

Bei einer Vielzahl von Faserstoffabfällen, wie zum Beispiel aus der Bauindustrie handelt es sich um besonders überwachungsbedürftige Abfälle, die nur von fachlich geeigneten Firmen ausgebaut und entsorgt werden dürfen. So sind diese Abfälle bereits am Entstehungsort staubdicht zu verpacken und gegebenenfalls zu befeuchten. Für den Transport sind geschlossene Behältnisse wie zum Beispiel reißfeste Kunststoffsäcke oder Gewebesäcke zu verwenden. Aufgrund potentieller Gesundheitsgefährdung ist die Entsorgung und gegebenfalls Weiterverarbeitung äußerst aufwendig und damit kostenintensiv.

Aus der DE 39 02 717 A1 ist ein Verfahren und ein Vorrichtung zur Entsorgung von Asbestfasern und/oder asbestfaserhaltigen Baustoffen bekannt. Die zu entsorgenden Stoffe werden an einer Abbaustelle von einer Saugleitung aufgenommen, einem Abscheider zugeführt, von diesem einem Mischer zugeführt, in dem das Mischen unter Zugabe von Wasser und eines hydraulischen Bindemittels erfolgt. Anschließend wird das Mischgut verpresst. Die DE 90 14 948 U1 beschreibt eine Vorrichtung zur Umwandlung von festen oder pastösen Gefahrenstoffen, insbesondere asbesthaltigem Aufbruch, in gefahrlosen Bauschutt. Die Vorrichtung umfasst dabei eine Zerkleinerungsvorrichtung und eine Mischeinrichtung zum Vermischen des zerkleinerten Gefahrenguts mit entsprechenden Bindungsstoffen.

Nachteilig an den bisher bekannten Verfahren und Vorrichtungen ist jedoch, dass ein sicheres und umweltgerechtes Zerkleinern derartiger Faserstoffabfälle aufgrund der durch das Zerkleinern entstehenden Staubentwicklung und Faserfreisetzung nicht oder nur unzureichend möglich ist.

Es ist daher Aufgabe der vorliegenden Erfindung, eine Vorrichtung und ein Verfahren zur Aufbereitung und Verarbeitung von Faserstoffabfällen, wie zum Beispiel Mineralwolleabfällen, insbesondere von Glas- oder Steinwolleabfällen, Asbestfasern oder Kohlefasern, der eingangs genannten Art bereitzustellen, die eine sicheres Zerkleinern und entsprechend sichere und wirtschaftliche Verwertung dieser Abfallstoffe gewährleistet.

Zur Lösung dieser Aufgabe dient eine Vorrichtung gemäß den Merkmalen des Anspruchs 1 sowie ein Verfahren mit den Merkmalen des Anspruchs 10. Vorteilhafte Ausgestaltungen mit zweckmäßigen Weiterbildungen der Erfindung sind in den Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft eine Vorrichtung zur Aufbereitung und Verarbeitung von Faserstoffabfällen, wie zum Beispiel Mineralwolleabfällen, insbesondere von Glas- oder Steinwolleabfällen, Asbestfasern oder Kohlefasern, umfassend mindestens eine Zerkleinerungsvorrichtung zur mechanischen Zerkleinerung der Fasern und/oder Fasergruppen der Faserstoffabfälle. Zudem umfasst die Vorrichtung mindestens eine Absaugvorrichtung, wobei diese mindestens eine Absaughaube und/oder eine Absaugwand umfasst und wobei die Absaugvorrichtung bezüglich der Zerkleinerungsvorrichtung derart angeordnet ist, dass die in der Zerkleinerungsvorrichtung während des Zerkleinerns der Faserstoffabfälle entstehenden Stäube und/oder Fasern von der Absaugvorrichtung angesaugt und mindestens einer mit der Absaugvorrichtung verbundenen oder in der Absaugvorrichtung integrierten Filtervorrichtung zuführbar sind. Die Vorrichtung weist zudem mindestens eine Pressvorrichtung zum Verpressen der in der Zerkleinerungsvorrichtung zerkleinerten Faserstoffabfälle und mindestens eine Mischvorrichtung zum Mischen und Vermengen der verpressten und zerkleinerten Faserstoffabfälle mit mindestens einem flüssigen oder fließfähigen Zuschlagstoff auf, so dass nach dem Vermischen der zerkleinerten Faserstoffabfälle mit dem mindestens einen flüssigen oder fließfähigen Zuschlagstoff das resultierende Gemisch in eine Form zur Aushärtung oder einen Transportbehälter zum Weitertransport gießbar ist. Die erfindungsgemäße Vorrichtung gewährleistet ein sicheres Zerkleinern von Faserstoffabfällen zu einem pulverartigen und/oder granulatartigen Stoff. Insbesondere sind durch die Absaugvorrichtung und die Filtervorrichtung gewährleistet, dass die für die möglicherweise krebserzeugenden beziehungsweise krebsverdächtige Faserabfallstoffe geltenden Luftgrenzwerte eingehalten werden. Idealerweise werden diese Luftgrenzwerte deutlich unterschritten. Auch die Staubentwicklung wird durch die erfindungsgemäße Vorrichtung auf ein Minimum reduziert. Dadurch wird es möglich, Faserstoffabfälle sicher zu zerkleinern und einer Weiterverarbeitung, die in unzerkleinertem Zustand gegebenfalls nicht möglich ist, zuzuführen. Bei dem Zuschlagstoff kann es sich um mindestens ein flüssiges oder fließfähiges Bindemittel handeln. Dabei können die zerkleinerten Faserstoffabfälle und das wenigstens eine Bindemittel eine Suspension ergeben. Das Gemisch aus zerkleinerten Fasern und Bindemittel kann zu unterschiedlichsten Formen, zum Beispiel zu Versatzbaustoffen in untertägigen Bergwerken, zu Lärmschutzwänden oder anderen Bauelementen verarbeitet, insbesondere vergossen werden. Ein entsprechendes Gießen, Formen und Austrocknen erlaubt eine kostengünstige und damit wirtschaftliche Herstellung von Bauformen aus den aufbereiteten Faserstoffabfällen. Insbesondere wird durch den Einsatz geeigneter Bindemittel verhindert, dass die zerkleinerten Faserstoffabfälle wieder in die Umwelt - und zwar in freier, d.h. nicht-gebundener Form - gelangen.

In weiteren vorteilhaften Ausgestaltungen der erfindungsgemäßen Vorrichtung umfasst die Absaugvorrichtung mindestens eine Absaughaube und/oder eine Absaugwand. Zudem kann die Absaughaube und/oder Absaugwand über eine Absaugleitung mit der Filtervorrichtung verbunden sein. Die Filtervorrichtung kann wiederum mindestens ein Filterelement zur Rückhaltung der Fasern und/oder Stäube aufweisen. Zudem können die Filterelemente austauschbar und/oder reinigbar ausgebildet sein. Durch diese Maßnahmen ist ein sicheres Zerkleinern der Faserstoffabfälle möglich. Des Weiteren können die genannten Einzelelemente der erfindungsgemäßen Vorrichtung den Anforderungen vor Ort angepasst werden. Auch die Absaugvorrichtung kann als separates Element der erfindungsgemäßen Vorrichtung ausgebildet sein. Dies hat den Vorteil, dass bereits vorhandene Zerkleinerungsvorrichtungen nachträglich mit der Absaugvorrichtung ausrüstbar sind.

In weiteren vorteilhaften Ausgestaltungen der erfindungsgemäßen Vorrichtung ist die Pressvorrichtung insbesondere eine Ballen- oder Schrankpresse. Auch andere Arten von Pressen sind denkbar. In einer weiteren Ausführungsform kann die Zerkleinerungsvorrichtung mindestens eine Aufnahmeöffnung zur Aufnahme von mittels mindestens einer ersten Fördervorrichtung angelieferten Faserstoffabfällen und mindestens eine Ausgabeöffnung zur Ausgabe der zerkleinerten Faserstoffabfälle aufweisen. Zudem ist es möglich, dass die Ausgabeöffnung mit einer zweiten Fördervorrichtung zum Abtransport der zerkleinerten Faserstoffabfälle in Wirkverbindung steht. Eine derartige Ausgestaltung und Anordnung der erfindungsgemäßen Vorrichtung gewährleistet die automatische Aufbereitung von Faserstoffabfällen. Damit ist es möglich, ein hohes Volumen an Faserstoffabfällen in kurzer Zeit zu verarbeiten.

Zudem kann die Vorrichtung mindestens eine Transportvorrichtung zum Transport der in der Zerkleinerungsvorrichtung zerkleinerten Faserstoffabfälle zu der Mischvorrichtung und/oder von der Pressvorrichtung zu der Mischvorrichtung umfassen. Damit kann der Verarbeitungsvorgang rasch durchgeführt werden. Insbesondere können relativ große Mengen an Faserstoffabfällen verarbeitet werden.

In einer weiteren vorteilhaften Ausgestaltung der erfindungsgemäßen Vorrichtung ist diese transportabel ausgebildet. Damit ist es möglich, dass die Vorrichtung vor Ort, das heißt am Entstehungsort der Faserstoffabfälle, positioniert werden kann, so dass mögliche Umwelt- oder Gesundheitsgefährdungen durch einen unsachgemäßen Transport der Faserstoffabfälle von dem Entstehungsort zum Verwertungsort vermieden werden.

Verwendung findet die gemäß dem ersten Erfindungsaspekt beschriebene erfindungsgemäße Vorrichtung erfindungsgemäß bei der Aufbereitung und Verarbeitung von Faserstoffabfällen, wie zum Beispiel Mineralwolleabfällen, insbesondere von Glas- oder Steinwolleabfällen, Asbestfasern oder Kohlefasern. Auch die Verwendung zur Aufbereitung von anderen faserhaltigen Bauwerkstoffen ist denkbar und möglich.

Ein zweiter Aspekt der Erfindung betrifft ein Verfahren zur Aufbereitung und Verarbeitung von Faserstoffabfällen, wie zum Beispiel Mineralwolleabfällen, insbesondere von Glas- oder Steinwolleabfällen, Asbestfasern oder Kohlefasern umfassend zumindest folgende Schritte: Zerkleinern von Fasern und/oder Fasergruppen der Faserstoffabfälle in mindestens einer Zerkleinerungsvorrichtung unter gleichzeitiger Absaugung der während des Zerkleinerns der Faserstoffabfälle entstehenden Stäube und/oder Fasern mittels mindestens einer Absaugvorrichtung, wobei die Absaugvorrichtung bezüglich der Zerkleinerungsvorrichtung derart angeordnet ist, dass die in der Zerkleinerungsvorrichtung während des Zerkleinerns der Faserstoffabfälle entstehenden Stäube und/oder Fasern von der Absaugvorrichtung angesaugt und mindestens einer mit der Absaugvorrichtung verbundenen oder in der Absaugvorrichtung integrierten Filtervorrichtung zugeführt werden, wobei nach dem Schritt des Zerkleinerns die pulver- und/oder granulatartigen zerkleinerten Faserstoffabfälle mindestens einer Pressvorrichtung zum Verpressen zugeführt werden. Damit kann vorteilhafterweise das Volumen der entstehenden Stoffe deutlich reduziert werden, was beispielsweise zu einer deutliche Reduzierung von Lager- und Transportkosten führt. Anschließend werden die so verpressten und zerkleinerten Faserstoffabfälle mindestens einer Mischvorrichtung zugeführt, wobei in der Mischvorrichtung die verpressten und zerkleinerten Faserstoffabfälle mit mindestens einem flüssigen oder fließfähigen Zuschlagstoff vermischt und vermengt werden und nach dem Vermischen der zerkleinerten Faserstoffabfälle mit dem Zuschlagstoff das resultierende Gemisch in eine Form zur Aushärtung oder einen Transportbehälter zum Weitertransport gegossen wird. Das erfindungsgemäße Verfahren gewährleistet ein sicheres Zerkleinern von Faserstoffabfällen zu einem pulverartigen und/oder granulatartigen Stoff. Insbesondere sind durch die Absaugung und die Filtervorrichtung gewährleistet, dass die für die möglicherweise krebserzeugenden beziehungsweise krebsverdächtige Faserabfallstoffe geltenden Luftgrenzwerte eingehalten werden. Idealerweise werden diese Luftgrenzwerte deutlich unterschritten. Auch die Staubentwicklung wird durch das erfindungsgemäße Verfahren auf ein Minimum reduziert. Dadurch wird es möglich, Faserstoffabfälle sicher zu zerkleinern und einer Weiterverarbeitung, die in unzerkleinertem Zustand gegebenfalls nicht möglich ist, zuzuführen. Als geeignete Zuschlagstoffe können Bindemittel beispielsweise aus der folgenden Gruppe an Substanzen ausgewählt werden: Zement, Gips, Kalk, Kalkbinder, künstliche oder natürliche Harze, Asche, Salzlösungen oder eine Mischung mindestens zweier Substanzen davon. Auch andere Bindemittel sind denkbar. Mit dem erfindungsgemäßen Verfahren ist eine sichere, wirtschaftliche Verwertung von Faserstoffabfällen in industriellem Maßstab möglich. Beispielsweise können hierdurch Zuschlagstoffe für den Untertageversatz gefertigt werden. Hierbei können zum Beispiel Mineralwolle, verpackte Asbestabfälle oder Karbon mit einer leistungsfähigen Mühle zerkleinert werden. Das zerkleinerte Material kann dann beispielsweise mit Restfaserbindemittel, Zement oder anderen Stoffen zu einem Untertageversatzmaterial verarbeitet werden. Hierzu bietet sich ein Zwangsmischer an. Weil es sich bei Mineralwolle oder Asbest um gefährliche Abfälle handelt, müssen die bei der Behandlung anfallenden Emissionen mittels der genannten Absaugvorrichtung abgesaugt werden. Dies kann auch durch eine separate und gegebenfalls zusätzliche Absaugvorrichtung, die im Bereich der Mischvorrichtung angeordnet ist, erzielt werden.

Weitere Einzelheiten, Merkmale und Vorteile der Erfindung ergeben sich aus den in den folgenden Zeichnungen dargestellten und beschriebenen Ausführungsbeispielen. Es zeigen:
- Figur 1: eine schematische Darstellung einer erfindungsgemäßen Vorrichtung zur Aufbereitung von Mineralwolleabfällen gemäß einer ersten Ausführungsform;
- Figur 2: eine schematische Darstellung einer erfindungsgemäßen Vorrichtung zur Aufbereitung von Mineralwolleabfällen gemäß einer zweiten Ausführungsform; und
- Figur 3: eine schematische Darstellung einer erfindungsgemäßen Vorrichtung zur Aufbereitung von Mineralwolleabfällen gemäß einer dritten Ausführungsform.

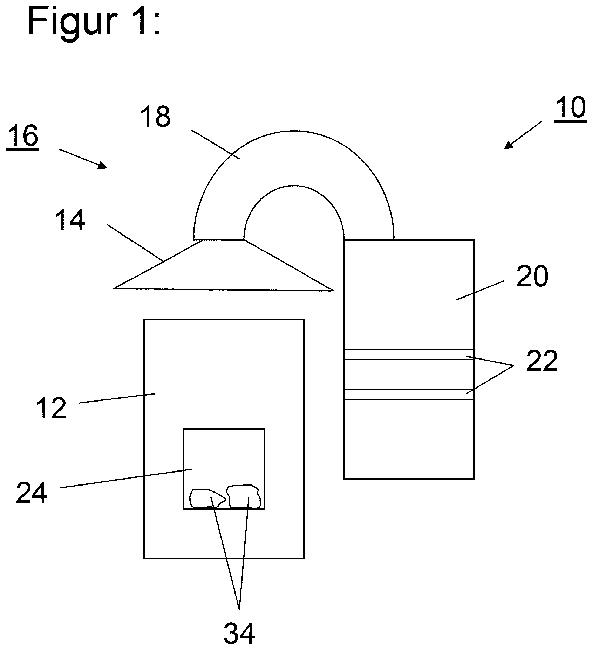

Figur 1 zeigt eine schematische Darstellung einer Vorrichtung 10 zur Aufbereitung von Faserstoffabfällen 34 gemäß einer ersten Ausführungsform. Die Vorrichtung 10 umfasst dabei eine Zerkleinerungsvorrichtung 12 zur Aufnahme und Zerkleinern von verpackten Faserstoffabfällen 34. Die schematisch dargestellte Zerkleinerungsvorrichtung 12 ist in dem genannten Ausführungsbeispiel eine Mühle oder ein Schredder. Sie weist eine Aufnahmeöffnung 24 zum Einbringen der 34 auf. Mittels mechanischer Zerkleinerungsmittel werden innerhalb der Zerkleinerungsvorrichtung 12 die Faserstoffabfälle 34 zerkleinert und als Pulver und/oder als Granulat wieder entnommen. Zudem umfasst die Vorrichtung 10 eine Absaugvorrichtung 16, welche aus einer Absaughaube 14 und einer Filtervorrichtung 20 sowie einer die Abzugshaube 14 und die Filtervorrichtung 20 verbindenden Absaugleitung 18 besteht. Die Absaughaube 14 ist im dargestellten Ausführungsbeispiel über der Zerkleinerungsvorrichtung 12 angeordnet. Es ist aber auch möglich, die Absaughaube 14 seitlich an der Zerkleinerungsvorrichtung 12 zu positionieren. Zudem besteht die Möglichkeit eine so genannte Absaugwand im Bereich der Zerkleinerungsvorrichtung 12 zu installieren. Des Weiteren ist in dem dargestellten Ausführungsbeispiel ein Unterdruckhaltegerät in der Filtervorrichtung 20 integriert, wobei die Absaugung von Stäuben und/oder Fasern, die während des Zerkleinerns in der Zerkleinerungsvorrichtung 12 entstehen, mittels Unterdruck über die Absaughaube 14 abgesaugt werden. Die Absaugung erfolgt mit dem genannten Unterdruckhaltegerät. Die Luftleistung beträgt dabei ca. 500 m³/h bei einer Leistung von ca. 0,3 kW. Die Absaughaube 14 kann auch als so genannte Drallhaube ausgebildet sein. Die Absaugvorrichtung 16 ist in den dargestellten Ausführungsbespielen als separate Einheit ausgebildet. Dies hat den Vorteil, dass bereits vorhandene Zerkleinerungsvorrichtungen nachträglich mit der Absaugvorrichtung 16 ausrüstbar sind.

Des Weiteren erkennt man, dass die Filtervorrichtung 20 zwei Filterelemente 22 umfasst. Das Filtermaterial kann dabei der Anwendung angepasst werden, so dass die beim Zerkleinern der Faserstoffabfälle 34 entstehenden Stäube und/oder Fasern nahezu vollständig in den Filterelementen 22 verbleiben. Die Filterelemente 22 können dabei austauschbar und/oder reinigbar ausgebildet sein. In dem dargestellten Ausführungsbeispiel erfolgt die Abreinigung der Filterelemente 22 im so genannten Offline-Modus mittels eines Rüttelmotors (nicht dargestellt). Die Stäube und/oder Fasern werden in einem separaten Behälter aufgefangen. Insbesondere werden die Filterelemente 22 derart ausgewählt, dass die Luftwerte am Arbeitsplatz kleiner 50000 Fasern/m³ betragen. Des Weiteren ist es möglich, eine zusätzliche Absaugeinheit an der Filtervorrichtung 20 anzuschließen (nicht dargestellt).

In dem dargestellten Ausführungsbeispiel folgt der so genannte Rohgaseintritt oben an der Filtervorrichtung 20. Es ist aber auch möglich, dass der Rohgaseintritt am unteren, bodenseitigen Ende der Filtervorrichtung 20 erfolgt. Dadurch kann eine Schwerkraft-Vorabscheidung der Stäube und Fasern erfolgen. In diesem Fall kann das Reingas oben zentrisch oder seitlich aus der Filtervorrichtung 20 austreten.

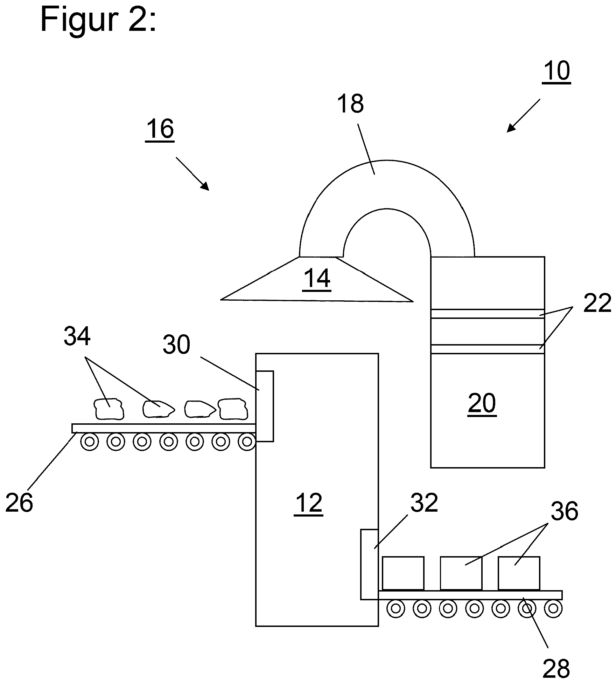

Figur 2 zeigt eine schematische Darstellung einer Vorrichtung 10 zur Aufbereitung von Faserstoffabfällen 34 gemäß einer zweiten Ausführungsform. Im Unterschied zu der in Figur 1 dargestellten ersten Ausführungsform erfolgt hier die Zuführung der Faserstoffabfälle 34 zu der Zerkleinerungsvorrichtung 12 über eine erste Fördervorrichtung 26. Die Zerkleinerungsvorrichtung 12 weist hierzu eine Aufnahmeöffnung 30 zur Aufnahme der angelieferten Faserstoffabfälle 34 auf. Nach dem mechanischen Zerkleinern der Faserstoffabfälle 34 innerhalb der Zerkleinerungsvorrichtung 12 erfolgt ein automatischer Abtransport des entstandenen Pulvers und/oder Granulats in Transportbehältern 36 über eine Ausgabeöffnung 32 der Zerkleinerungsvorrichtung 12 und eine zweite Fördervorrichtung 28. Die Ausgestaltung der Absaugvorrichtung 16 entspricht der im ersten Ausführungsbeispiel der Vorrichtung 10 beschriebenen.

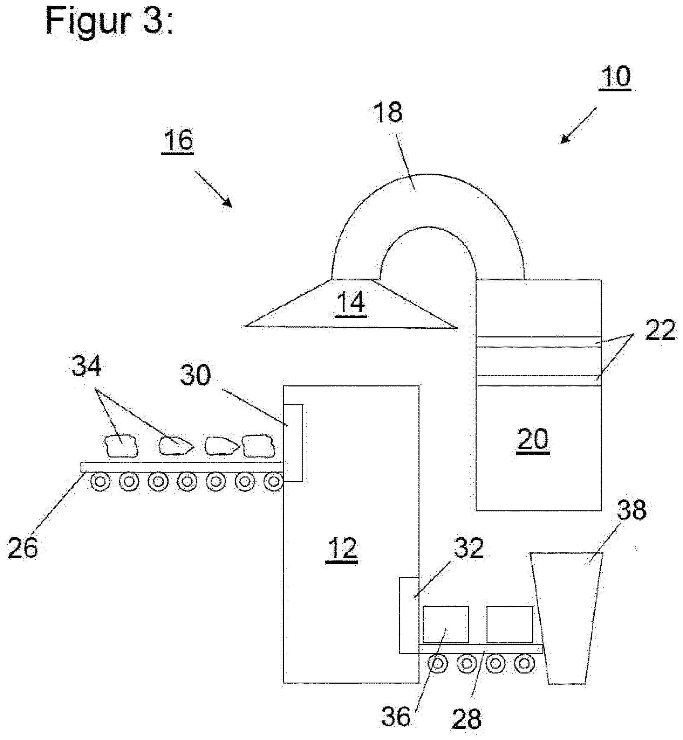

Figur 3 zeigt eine schematische Darstellung einer Vorrichtung 10 zur Aufbereitung von Faserstoffabfällen 34 gemäß einer dritten Ausführungsform. Im Unterschied zu der in Figur 2 dargestellten zweiten Ausführungsform wird das entstandene Pulver und/oder Granulat in den Transportbehältern 36 über die Ausgabeöffnung 32 der Zerkleinerungsvorrichtung 12 und die zweite Fördervorrichtung 28 zu einer Mischvorrichtung 38 transportiert. In der Mischvorrichtung 38 werden die zerkleinerten Faserstoffabfälle mit mindestens einem Zuschlagstoff, insbesondere einem flüssigen oder fließfähigen Bindemittel, vermischt und vermengt. Zudem besteht die Möglichkeit, dass nach dem Vermischen der zerkleinerten Faserstoffabfälle mit mindestens einem flüssigen oder fließfähigen Zuschlagstoff das resultierende Gemisch in eine Form zur Aushärtung oder einen Transportbehälter zum Weitertransport gegossen wird (nicht dargestellt). Geeignete Bindemittel können beispielsweise aus der folgenden Gruppe an Substanzen ausgewählt werden: Zement, Gips, Kalk, Kalkbinder, künstliche oder natürliche Harze, Asche, Salzlösungen oder eine Mischung mindestens zweier Substanzen davon. Auch andere Bindemittel sind denkbar.

Das in der Zerkleinerungsvorrichtung 12 hergestellte Pulver und/oder Granulat der Faserstoffabfälle 34 kann zudem einer Pressvorrichtung der Vorrichtung 10 zugeführt werden (nicht dargestellt).

## Patentansprüche

1. Vorrichtung zur Aufbereitung und Verarbeitung von Faserstoffabfällen (34), wie zum Beispiel Mineralwolleabfällen, insbesondere von Glas- oder Steinwolleabfällen, Asbestfasern oder Kohlefasern umfassend mindestens eine Zerkleinerungsvorrichtung (12) zur mechanischen Zerkleinerung der Fasern und/oder Fasergruppen der Faserstoffabfälle (34), wobei die Vorrichtung (10) mindestens eine Absaugvorrichtung (16) umfasst und diese mindestens eine Absaughaube (14) und/oder mindestens eine Absaugwand umfasst, wobei die Absaugvorrichtung (16) bezüglich der Zerkleinerungsvorrichtung (12) derart angeordnet ist, dass die in der Zerkleinerungsvorrichtung (12) während des Zerkleinerns der Faserstoffabfälle (34) entstehenden Stäube und/oder Fasern von der Absaugvorrichtung (16) angesaugt und mindestens einer mit der Absaugvorrichtung (16) verbundenen oder in der Absaugvorrichtung (16) integrierten Filtervorrichtung (20) zuführbar sind, wobei die Vorrichtung (10) mindestens eine Pressvorrichtung zum Verpressen der in der Zerkleinerungsvorrichtung (12) zerkleinerten Faserstoffabfälle (34) aufweist, und
wobei die Vorrichtung (10) mindestens eine Mischvorrichtung (38) zum Mischen und Vermengen der verpressten und zerkleinerten Faserstoffabfälle (34) mit mindestens einem flüssigen oder fließfähigen Zuschlagstoff aufweist, so dass nach dem Vermischen der zerkleinerten Faserstoffabfälle mit dem mindestens einen flüssigen oder fließfähigen Zuschlagstoff das resultierende Gemisch in eine Form zur Aushärtung oder einen Transportbehälter zum Weitertransport gießbar ist.

2. Vorrichtung nach Anspruch 1,
**dadurch gekennzeichnet,**
**dass** die Absaughaube (14) und/oder Absaugwand über eine Absaugleitung (18) mit der Filtervorrichtung (20) verbunden ist.

3. Vorrichtung nach einem der vorhergehenden Ansprüche,
**dadurch gekennzeichnet,**
**dass** die Filtervorrichtung (20) mindestens ein Filterelement (22) zur Rückhaltung der Fasern und/oder Stäube aufweist;
oder
**dass** die Filtervorrichtung (20) mindestens ein Filterelement (22) zur Rückhaltung der Fasern und/oder Stäube aufweist und das Filterelement (22) austauschbar und/oder reinigbar ausgebildet ist.

4. Vorrichtung nach einem der vorhergehenden Ansprüche,
**dadurch gekennzeichnet,**
**dass** die Pressvorrichtung eine Ballen- oder Schrankpresse zum Verpressen der zerkleinerten Fasern und/oder Fasergruppen der Faserstoffabfälle (34) umfasst.

5. Vorrichtung nach einem der vorhergehenden Ansprüche,
**dadurch gekennzeichnet,**
**dass** die Zerkleinerungsvorrichtung (12) mindestens eine Aufnahmeöffnung (30) zur Aufnahme von mittels mindestens einer ersten Fördervorrichtung (26) angelieferten Faserstoffabfällen (34) und mindestens eine Ausgabeöffnung (32) zur Ausgabe der zerkleinerten Faserstoffabfälle (34) umfasst.

6. Vorrichtung nach Anspruch 1,
**dadurch gekennzeichnet,**
**dass** die Vorrichtung (10) mindestens eine Transportvorrichtung zum Transport der in der Zerkleinerungsvorrichtung (12) zerkleinerten Faserstoffabfälle (34) von der Pressvorrichtung zu der Mischvorrichtung (38) umfasst.

7. Vorrichtung nach Anspruch 1,
**dadurch gekennzeichnet,**
**dass** es sich bei dem Zuschlagstoff um mindestens ein flüssiges oder fließfähiges Bindemittel handelt;
oder
**dass** es sich bei dem Zuschlagstoff um mindestens ein flüssiges oder fließfähiges Bindemittel handelt und die zerkleinerten Faserstoffabfälle (34) und das wenigstens eine Bindemittel eine Suspension ergeben.

8. Vorrichtung nach einem der vorhergehenden Ansprüche,
**dadurch gekennzeichnet,**
**dass** die Vorrichtung (10) transportabel ausgebildet ist und/oder dass die Absaugvorrichtung (16) als separates Element der Vorrichtung (10) ausgebildet ist.

9. Verwendung einer Vorrichtung (10) gemäß einem der Ansprüche 1 bis 8 zur Aufbereitung und Verarbeitung von Faserstoffabfällen (34), wie zum Beispiel Mineralwolleabfällen, insbesondere von Glas- oder Steinwolleabfällen, Asbestfasern oder Kohlefasern.

10. Verfahren zur Aufbereitung und Verarbeitung von Faserstoffabfällen (34), wie zum Beispiel Mineralwolleabfällen, insbesondere von Glas- oder Steinwolleabfällen, Asbestfasern oder Kohlefasern umfassend zumindest folgende Schritte:
- Zerkleinern von Fasern und/oder Fasergruppen der Faserstoffabfälle (34) in mindestens einer Zerkleinerungsvorrichtung (12) unter gleichzeitiger Absaugung der während des Zerkleinerns der Faserstoffabfälle (34) entstehenden Stäube und/oder Fasern mittels mindestens einer Absaugvorrichtung (16), wobei die Absaugvorrichtung (16) bezüglich der Zerkleinerungsvorrichtung (12) derart angeordnet ist, dass die in der Zerkleinerungsvorrichtung (12) während des Zerkleinerns der Faserstoffabfälle (34) entstehenden Stäube und/oder Fasern von der Absaugvorrichtung (16) angesaugt und mindestens einer mit der Absaugvorrichtung (16) verbundenen oder in der Absaugvorrichtung (16) integrierten Filtervorrichtung (20) zugeführt werden;
- Zuführen der pulver- und/oder granulatartigen zerkleinerten Faserstoffabfälle (34) zu mindestens einer Pressvorrichtung zum Verpressen der Faserstoffabfälle (34);
- Zuführen der verpressten Faserstoffabfälle (34) zu mindestens einer Mischvorrichtung (38); und wobei
- in der Mischvorrichtung (38) die zerkleinerten Faserstoffabfälle (34) mit mindestens einem flüssigen oder fließfähigen Zuschlagstoff vermischt und vermengt werden, wobei nach dem Vermischen der zerkleinerten Faserstoffabfälle (34) mit dem Zuschlagstoff das resultierende Gemisch in eine Form zur Aushärtung oder einen Transportbehälter zum Weitertransport gegossen wird.

11. Verfahren nach Anspruch 10,
**dadurch gekennzeichnet,**
**dass** die zerkleinerten und verpressten Faserstoffabfälle (34) mit einem flüssigen oder fließfähigen Bindemittel vermischt und vermengt werden.

## Claims

1. A device for conditioning and processing fibrous material waste (34), such as for example mineral wool waste, in particular glass or rock wool waste, asbestos fibers or carbon fibers, comprising at least one crushing device (12) for mechanically crushing the fibers and/or fiber groups of the fibrous material waste (34), wherein the device (10) includes at least one extraction device (16) and this one includes at least one extraction hood (14) and/or at least one extraction wall, wherein the extraction device (16) is arranged with respect to the crushing device (12) such that the dusts and/or fibers arising during crushing of the fibrous material waste (34) in the crushing device (12) are sucked by the extraction device (16) and can be supplied to at least one filter device (20) connected to the extraction device (16) or integrated in the extraction device (16), wherein the device (10) comprises at least one pressing device for pressing the fibrous material waste (34) crushed in the crushing device (12), and
wherein the device (10) comprises at least one mixing device (38) for mixing and blending the pressed and crushed fibrous material waste (34) with at least one liquid or flowable additive, such that after mixing the crushed fibrous material waste with the at least one liquid or flowable additive, the resulting mixture is castable into a mold for curing or into a transport container for further transport.

2. The device according to claim 1,
**characterized in that**
the extraction hood (14) and/or extraction wall are connected to the filter device (20) via an extraction line (18).

3. The device according to any one of the preceding claims,
**characterized in that**
the filter device (20) comprises at least one filter element (22) for retaining the fibers and/or dusts;
or
that the filter device (20) comprises at least one filter element (22) for retaining the fibers and/or dusts and the filter element (22) is formed exchangeable and/or cleanable.

4. The device according to any one of the preceding claims,
**characterized in that**
the pressing device includes a baling or cabinet press for pressing the crushed fibers and/or fiber groups of the fibrous material waste (34).

5. The device according to any one of the preceding claims,
**characterized in that**
the crushing device (12) includes at least one receiving opening (30) for receiving fibrous material waste (34) delivered by means of at least one first conveying device (26) and at least one output opening (32) for outputting the crushed fibrous material waste (34).

6. The device according to claim 1,
**characterized in that**
the device (10) includes at least one transport device for transporting the fibrous material waste (34) crushed in the crushing device (12) from the pressing device to the mixing device (38).

7. The device according to claim 1,
**characterized in that**
the additive is at least one liquid or flowable binder;
or
the additive is at least one liquid or flowable binder and the crushed fibrous material waste (34) and the at least one binder result in a suspension.

8. The device according to any one of the preceding claims,
**characterized in that**
the device (10) is formed transportable and/or that the extraction device (16) is formed as a separate element of the device (10).

9. A use of a device (10) according to any one of claims 1 to 8 for conditioning and processing fibrous material waste (34), such as for example mineral wool waste, in particular glass or rock wool waste, asbestos fibers or carbon fibers.

10. A method for conditioning and processing fibrous material waste (34), such as for example mineral wool waste, in particular glass or rock wool waste, asbestos fibers or carbon fibers, comprising at least the following steps:
- crushing fibers and/or fiber groups of the fibrous material waste (34) in at least one crushing device (12) with simultaneous extraction of the dusts and/or fibers arising during crushing of the fibrous material waste (34) by means of at least one extraction device (16), wherein the extraction device (16) is arranged with respect to the crushing device (12) such that the dusts and/or fibers arising during crushing of the fibrous material waste (34) in the crushing device (12) are sucked by the extraction device (16) and are supplied to at least one filter device (20) connected to the extraction device (16) or integrated in the extraction device (16);
- supplying the powdery and/or granular crushed fibrous material waste (34) to at least one pressing device for pressing the fibrous material waste (34);
- supplying the pressed fibrous material waste (34) to at least one mixing device (38); and wherein
- the crushed fibrous material waste (34) is mixed and blended with at least one liquid or flowable additive in the mixing device (38), wherein after mixing the crushed fibrous material waste (34) with the additive, the resulting mixture is cast into a mold for curing or into a transport container for further transport.

11. The method according to claim 10,
**characterized in that**
the crushed and pressed fibrous material waste (34) is mixed and blended with a liquid or flowable binder.

## Revendications

1. Dispositif de préparation et de traitement de déchets de matière fibreuse (34) tels que, par exemple, des déchets de laine minérale, en particulier des déchets de laine de verre ou de laine de roche, des fibres d'amiante ou des fibres de carbone, comprenant au moins un dispositif de broyage (12) pour le broyage mécanique des fibres et/ou de groupes de fibres des déchets de matière fibreuse (34), le dispositif (10) comprenant au moins un dispositif d'aspiration (16) et celui-ci comprenant au moins une hotte aspirante (14) et/ou au moins une paroi aspirante, le dispositif d'aspiration (16) étant agencé par rapport au dispositif de broyage (12) de telle sorte que les poussières et/ou les fibres générées dans le dispositif de broyage (12) pendant le broyage des déchets de matière fibreuse (34) sont aspirées par le dispositif d'aspiration (16) et peuvent être acheminées jusqu'à au moins un dispositif de filtrage (20) relié au dispositif d'aspiration (16) ou intégré dans le dispositif d'aspiration (16), le dispositif (10) comportant au moins un dispositif de compression pour compresser les déchets de matière fibreuse (34) broyés dans le dispositif de broyage (12), et
le dispositif (10) comportant au moins un dispositif de mélange (38) pour mélanger et homogénéiser les déchets de matière fibreuse (34) compressés et broyés avec au moins un additif liquide ou fluable, de telle sorte qu'après le mélange des déchets de matière fibreuse broyés avec le au moins un additif liquide ou fluable, le mélange résultant peut être coulé dans un moule pour durcir ou un conteneur de transport en vue d'une réexpédition.

2. Dispositif selon la revendication 1,
**caractérisé en ce que**
la hotte aspirante (14) et/ou la paroi aspirante est reliée au dispositif de filtrage (20) par un conduit d'aspiration (18).

3. Dispositif selon l'une des revendications précédentes,
**caractérisé en ce que**
le dispositif de filtrage (20) comporte au moins un élément filtrant (22) pour retenir les fibres et/ou les poussières ;
ou
le dispositif de filtrage (20) comporte au moins un élément filtrant (22) pour retenir les fibres et/ou les poussières et l'élément filtrant (22) est formé de manière à pouvoir être remplacé et/ou nettoyé.

4. Dispositif selon l'une des revendications précédentes,
**caractérisé en ce que**
le dispositif de compression comprend une presse à balles ou un compacteur pour compresser les fibres et/ ou groupes de fibres broyés des déchets de matière fibreuse (34).

5. Dispositif selon l'une des revendications précédentes,
**caractérisé en ce que**
le dispositif de broyage (12) comprend au moins une ouverture de réception (30) pour recevoir des déchets de matière fibreuse (34) acheminés au moyen d'au moins un premier dispositif de convoyage (26) et au moins une ouverture d'évacuation (32) pour évacuer les déchets de matière fibreuse (34) broyés.

6. Dispositif selon la revendication 1,
**caractérisé en ce que**
le dispositif (10) comprend au moins un dispositif de transport pour le transport des déchets de matière fibreuse (34) broyés dans le dispositif de broyage (12) depuis le dispositif de compression jusqu'au dispositif de mélange (38).

7. Dispositif selon la revendication 1,
**caractérisé en ce que**
l'additif est au moins un liant liquide ou fluable ;
ou
l'additif est au moins un liant liquide ou fluable et les déchets de matière fibreuse (34) broyés et le au moins un liant donnent une suspension.

8. Dispositif selon l'une des revendications précédentes,
**caractérisé en ce que**
le dispositif (10) est réalisé de manière à pouvoir être transporté et/ou le dispositif d'aspiration (16) est réalisé sous la forme d'un élément séparé du dispositif (10).

9. Utilisation d'un dispositif (10) selon l'une des revendications 1 à 8 pour la préparation et le traitement de déchets de matière fibreuse (34) tels que, par exemple, des déchets de laine minérale, en particulier des déchets de laine de verre ou de laine de roche, des fibres d'amiante ou des fibres de carbone.

10. Procédé de préparation et de traitement de déchets de matière fibreuse (34) tels que, par exemple, des déchets de laine minérale, en particulier des déchets de laine de verre ou de laine de roche, des fibres d'amiante ou des fibres de carbone, comprenant au moins les étapes suivantes consistant à :
- broyer des fibres et/ou des groupes de fibres des déchets de matière fibreuse (34) dans au moins un dispositif de broyage (12) tout en aspirant simultanément, au moyen d'au moins un dispositif d'aspiration (16), les poussières et/ou les fibres générées pendant le broyage des déchets de matière fibreuse (34), le dispositif d'aspiration (16) étant agencé par rapport au dispositif de broyage (12) de telle sorte que les poussières et/ou les fibres générées dans le dispositif de broyage (12) pendant le broyage des déchets de matière fibreuse (34) sont aspirées par le dispositif d'aspiration (16) et sont acheminées par au moins un dispositif de filtrage (20) relié au dispositif d'aspiration (16) ou intégré dans le dispositif d'aspiration (16) ;
- acheminer les déchets de matière fibreuse (34) broyés sous une forme pulvérulente et/ou granulaire jusqu'à au moins un dispositif de compression pour comprimer les déchets de matière fibreuse (34) ;
- conduire les déchets de matière fibreuse (34) compressés jusqu'à au moins un dispositif de mélange (38) ; et
- dans le dispositif de mélange (38), mélanger et homogénéiser les déchets de matière fibreuse (34) broyés avec au moins un additif liquide ou fluable, le mélange résultant étant, après le mélange des déchets de matière fibreuse (34) broyés avec l'additif, coulé dans un moule pour durcir ou dans un conteneur de transport en vue d'une réexpédition.

11. Procédé selon la revendication 10,
**caractérisé en ce que**
les déchets de matière fibreuse (34) broyés et compressés sont mélangés et homogénéisés avec un liant liquide ou fluable.
